# FASCICULE DE BREVET EUROPEEN

(11) **EP 2 700 052 B1**
(45) Date de publication et mention de la délivrance du brevet: **16.09.2015**
(21) Numéro de dépôt: 12710921.3
(22) Date de dépôt: 21.03.2012
(51) Int. Cl.: G06T 5/00, G06T 5/30

(54) **ANALYSE DE L'IMAGE NUMERIQUE DE LA SURFACE INTERNE D'UN PNEUMATIQUE - TRAITEMENT DES POINTS DE FAUSSE MESURE**
ANALYSE EINES DIGITALEN BILDES DER INNENFLÄCHE EINES REIFENS UND VERARBEITUNG VON FALSCHEN MESSPUNKTEN
ANALYSIS OF THE DIGITAL IMAGE OF THE INTERNAL SURFACE OF A TYRE AND PROCESSING OF FALSE MEASUREMENT POINTS

(30) Priorité: 18.04.2011 FR 1153346
(43) Date de publication de la demande: 26.02.2014
(73) Titulaire: MICHELIN Recherche et Technique S.A., 1763 Granges-Paccot (CH); Compagnie Générale des Etablissements Michelin, 63000 Clermont-Ferrand (FR)
(72) Inventeur: ZANELLA, Jean-Paul, F-63040 Clermont-Ferrand Cedex 9 (FR); MOREAU, Claire, F-63040 Clermont-Ferrand Cedex 9 (FR); NOYEL, Guillaume, F-63040 Clermont-Ferrand Cedex 9 (FR); SHEN, Yusi, F-63040 Clermont-Ferrand Cedex 9 (FR)
(74) Mandataire: Roussy, Delphine
(86) Numéro de dépôt international: PCT/EP2012/055017
(87) Numéro de publication internationale: WO 2012/143199

(56) Documents cités:
- WO-A1-03/023699
- US-A1- 2003 012 453
- JINSUNG OH ET AL: "Ranked directional morphological filtering of impulse noise in images", ACOUSTICS, SPEECH, AND SIGNAL PROCESSING, 2000. ICASSP '00. PROCEEDING S. 2000 IEEE INTERNATIONAL CONFERENCE ON 5-9 JUNE 2000, PISCATAWAY, NJ, USA,IEEE, vol. 6, 5 juin 2000 (2000-06-05), pages 2167-2170, XP010504729, ISBN: 978-0-7803-6293-2

## Description

L'invention concerne le domaine de la fabrication des pneumatiques et plus particulièrement le domaine de l'inspection automatique de la surface d'un pneumatique en vue d'établir un diagnostic de conformité par rapport à des références préétablies.

Une des étapes de ce processus consiste, de manière connue, p. ex. du document WO03023699 à acquérir l'image en trois dimensions de la surface du pneumatique.

L'acquisition de cette image se fait à l'aide de moyens basés sur le principe de la triangulation optique, mettant par exemple en oeuvre un capteur 2D couplé à une source d'éclairage de type laser.

L'image topographique de la surface du pneumatique est en fait une image bidimensionnelle, dite à niveau de gris, dans laquelle, à tout point, i.e. à tout pixel (x, y) de l'image, est associé une valeur f(x, y), appelée niveau de gris, et généralement comprise entre 0 et 255. Cette valeur de niveau de gris peut utilement être codée sur 8, ou 16 bits pour une meilleure dynamique. Le niveau de gris représente l'altitude de ce point par rapport à la surface. Pour un codage sur 8 bits, la valeur 255 (blanc) correspond à l'altitude la plus haute, et la valeur 0 (noir), correspond à l'altitude la plus basse. En règle générale les pixels de l'image sont disposés en ligne et en colonne.

On observe toutefois que l'image de la surface issue de ces moyens d'acquisition peut présenter des points de fausse mesure qu'il est nécessaire de repérer et de faire disparaître avant d'entreprendre les traitements numériques ultérieurs. Faute de quoi, les algorithmes d'analyse pourraient considérer à tort ces zones comme des anomalies structurelles du pneumatique à inspecter.

Ces points apparaissent en règle générale dans les zones à texture élevée, dans lesquelles le bruit de mesure est important. La caméra enregistre à tort les informations provenant de la lumière réfléchie, au lieu de considérer les informations provenant du faisceau incident. Ces points de fausse mesure apparaissent alors comme des traces de surbrillance dans un fond d'image relativement uniforme. Cette situation se présente en particulier lorsque l'on considère la surface interne du pneumatique.

Tous ces points, dits de fausse mesure, se distinguent par le fait qu'ils ont des positions très décalées par rapport aux points situés dans leur environnement immédiat. On entend ici par très décalé, un décalage supérieur à 4 ou 5mm, qui se distingue donc nettement des variations de profil apparaissant de manière commune à la surface d'un pneumatique.

L'invention a pour objet de proposer une méthode de traitement simple permettant d'identifier ces points, ainsi qu'une méthode de correction des valeurs numériques décrivant la surface.

La méthode de traitement de l'image numérique tridimensionnelle de la surface externe d'un pneumatique selon l'invention prévoit l'utilisation des méthodes de traitement d'image à l'aide des outils de type morphologique.

Ces méthodes consistent, de manière connue, à modifier les motifs de l'image avec des outils permettant de l'éroder ou de le dilater. Ce qui revient dans le cas présent à modifier les reliefs de la surface à inspecter.

Les opérations morphologiques d'érosion et de dilatation consistent, pour chaque point d'une image, à rechercher la valeur minimale ou la valeur maximale de niveau de gris des points voisins comprises à l'intérieur d'un élément structurant, de forme et de surface données, centré sur le point à analyser et définissant un voisinage de ce point. Pour une érosion la valeur en ce point devient alors la valeur minimale, et pour une dilatation la valeur en ce point devient la valeur maximale. La combinaison d'une érosion suivie d'une dilatation est dénommée ouverture, et la combinaison d'une dilatation suivie d'une érosion est dénommée fermeture.

Selon l'invention, la méthode de traitement de l'image numérique tridimensionnelle de la surface d'un pneumatique contient les étapes au cours desquelles
- on capture l'image tridimensionnelle de ladite surface et on affecte à chaque point de l'image acquise une valeur de niveau de gris correspondant à son élévation,
- à l'aide d'un premier opérateur morphologique utilisant un élément structurant rectangulaire, on effectue une première transformation de l'image de la surface de type fermeture,
- à l'aide d'un deuxième opérateur morphologique utilisant un élément structurant rectangulaire, on effectue une deuxième transformation de l'image de la surface de type ouverture,
- en chaque point de l'image, on affecte une valeur de niveau de gris égale à la valeur minimale entre la valeur de niveau de gris en ce point de l'image obtenue à l'issue de la deuxième transformation et la valeur de niveau de gris en ce point de l'image acquise, de manière à éliminer les points de fausse mesure.

Ayant observé que les points de fausse mesure situés sur la surface intérieure du pneumatique ont une forme allongée et étroite dans le sens perpendiculaire à la direction circonférentielle du pneumatique, l'opérateur morphologique utilisé pour la première transformation est de préférence un rectangle dont la longueur dans le sens circonférentiel du pneumatique est comprise entre 50 et 100 pixels s, et la largeur dans la direction perpendiculaire à la direction circonférentielle est inférieure à 10 pixel.

Pour les mêmes raisons, l'opérateur morphologique utilisé pour la deuxième transformation est de préférence un rectangle dont la longueur dans le sens circonférentiel du pneumatique est comprise entre 500 et 1000 pixels, et la largeur dans la direction perpendiculaire à la direction circonférentielle est inférieure à 10 pixels.

Cette méthode s'applique avantageusement à l'inspection de la surface interne du pneumatique.

La description qui suit s'appuie sur les figures 1 à 5 dans lesquelles :
- La figure 1 représente une vue schématique d'un moyen de capture de l'image de la surface d'un pneumatique,
- la figure 2 représente l'image de la surface intérieure d'un pneumatique issue directement des moyens de capture de l'image,
- la figure 3 représente l'image de la surface intérieure après traitement à l'aide de la première transformation,
- la figure 4 représente l'image de la surface intérieure après traitement à l'aide de la deuxième transformation,
- l'image 5 représente une image de la surface intérieure après traitement à l'aide de la méthode selon l'invention.

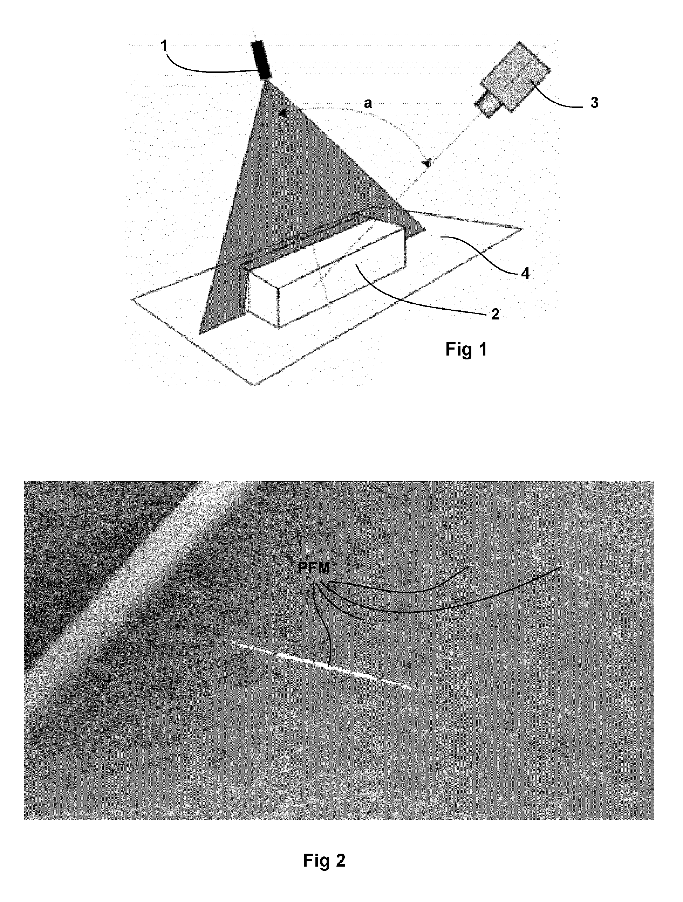

L'acquisition de l'image de la surface d'un pneumatique est illustrée à la figure 1. Cette acquisition s'opère, à titre d'exemple, à l'aide d'une lumière de fente émise par un laser 1, et d'une caméra 3 apte à capter l'image 2D de la surface éclairée. La caméra est positionnée de sorte que sa direction de visée fasse un angle donné a avec le faisceau émis par la source laser. Par triangulation, il est alors possible de déterminer les coordonnées de l'élément de relief 2 par rapport à la surface support 4. En règle générale, la lumière de fente est dirigée selon une direction axiale ou radiale, perpendiculaire à la direction circonférentielle correspondant au sens de la rotation imposée au pneumatique pour saisir une image complète de sa surface. A chaque point (x,y) du plan support on affecte une valeur de niveau de gris proportionnelle à l'élévation de ce point par rapport à la surface de référence.

La figure 2 représente l'image issue de cette saisie. On observe la présence de points de fausse mesure, notés PFM. Ces points apparaissent comme des surbrillances de forme allongée. Ils sont donc situés anormalement au dessus, voire très au-dessus, des points de la surface qui leurs sont proches et ne correspondent à aucun relief particulier.

Cette image est alors modifiée à l'aide d'un premier traitement utilisant un opérateur morphologique de forme rectangulaire de manière à réduire les perturbations dans la détection des points de fausse mesure engendrées par la présence de motifs texturés, et à faire ressortir les points de fausse mesure. La taille de cet opérateur est ajustée à la taille des motifs texturés que l'on cherche à filtrer. En l'espèce, de bons résultats sont obtenus avec un opérateur dont la longueur dans le sens circonférentiel du pneumatique est comprise entre 50 et 100 pixels, et la largueur dans la direction perpendiculaire à la direction circonférentielle est inférieure à 10 pixels.

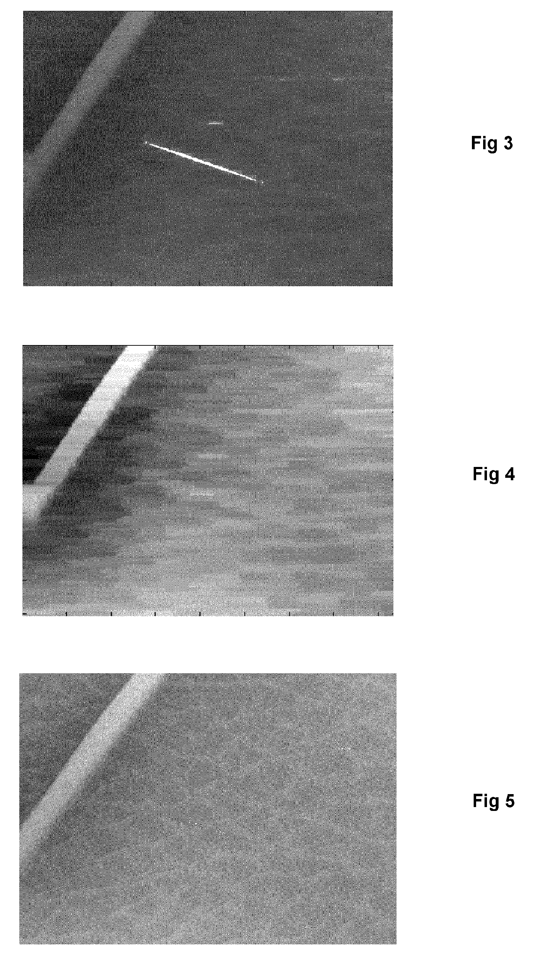

La figure 3 est une vue partielle de l'image de la surface du pneumatique après la réalisation du premier traitement.

Le deuxième traitement vise à supprimer les objets fins apparaissant sur l'image issue du premier traitement tels que les points de fausse mesure. A cet effet on tire partie de la forme allongée de ces anomalies pour ajuster en conséquence la forme de l'élément structurant utilisé pour le deuxième traitement qui correspond dans ce cas à une ouverture. Un rectangle dont la longueur dans le sens circonférentiel du pneumatique est comprise entre 500 et 1000 pixels, et la largeur dans la direction perpendiculaire à la direction circonférentielle est inférieure à 10 pixels donne dans ces circonstances des résultats satisfaisants.

La figure 4 illustre l'image transformée à l'aide du deuxième traitement. On observe que les zones contenant les points de fausse mesure sont exemptes de traces anormales.

La dernière étape du traitement consiste alors à affecter à chaque pixel la valeur de niveau de gris, et donc une élévation, qui correspond à la valeur minimale entre la valeur de ce niveau de gris en ce point de l'image acquise et la valeur de niveau de gris en ce point de l'image issue de la deuxième transformation. Les valeurs de niveau de gris de l'image obtenue sont égales aux valeurs de niveau de gris de l'image acquise à l'exception des points de fausse mesure pour lesquels la valeur de niveau de gris correspond à la valeur issue de l'image transformée à l'aide de la deuxième transformation. Ce traitement permet de reconstituer en ces points une continuité de la texture présente sur l'image acquise.

Comme cela a été indiqué précédemment cette méthode s'applique particulièrement bien aux zones fortement texturées, et en particulier aux surfaces intérieures du pneumatique. Toutefois, de manière non limitative, il n'est pas exclu d'utiliser cette même méthode pour affiner les images de la partie externe de la surface du pneumatique lorsque ces dernières comportent des zones texturées.

## Revendications

1. Méthode de traitement de l'image numérique tridimensionnelle de la surface d'un pneumatique dans laquelle :
- on capture l'image tridimensionnelle de ladite surface et on affecte à chaque point de l'image acquise une valeur de niveau de gris correspondant à son élévation,
- à l'aide d'un premier opérateur morphologique utilisant un élément structurant rectangulaire, on effectue une première transformation de l'image de la surface de type fermeture,
- à l'aide d'un deuxième opérateur morphologique utilisant un élément structurant rectangulaire, on effectue sur l'image transformée une deuxième transformation de la surface de type ouverture,
- en chaque point de l'image, on affecte une valeur de niveau de gris égale à la valeur minimale entre la valeur de niveau de gris en ce point de l'image obtenue par la deuxième transformation et la valeur de niveau de gris en ce point de l'image acquise, de manière à éliminer les points de fausse mesure.

2. Méthode de traitement selon la revendication 1, dans laquelle l'opérateur morphologique utilisé pour la première transformation est un rectangle dont la longueur dans le sens circonférentiel du pneumatique est comprise entre 50 et 100 pixels, et la largeur dans la direction perpendiculaire à la direction circonférentielle est inférieure à 10 pixels.

3. Méthode de traitement selon la revendication 1 ou 2, dans laquelle l'opérateur morphologique utilisé pour la deuxième transformation est un rectangle dont la longueur dans le sens circonférentiel du pneumatique est comprise entre 500 et 1000 pixels, et la largeur dans la direction perpendiculaire à la direction circonférentielle est inférieure à 10 pixels.

4. Méthode de traitement selon l'une des revendications 1 à 3, dans laquelle l'image capturée est celle de la surface interne du pneumatique.

## Patentansprüche

1. Verfahren zum Verarbeiten des dreidimensionalen digitalen Bildes der Oberfläche eines Luftreifens, wobei:
- das dreidimensionale Bild der Oberfläche aufgenommen wird und jedem Punkt des erfassten Bildes ein Graustufenwert, der seiner Erhebung entspricht, zugewiesen wird,
- mit Hilfe eines ersten morphologischen Operators, der ein rechtwinkliges strukturgebendes Element verwendet, eine erste Transformation des Bildes der Oberfläche des geschlossenen Typs ausgeführt wird,
- mit Hilfe eines zweiten morphologischen Operators, der ein rechtwinkliges strukturgebendes Element verwendet, an dem transformierten Bild eine zweite Transformation der Oberfläche des geöffneten Typs ausgeführt wird und
- jedem Punkt des Bildes ein Graustufenwert zugewiesen wird, der gleich dem Minimalwert zwischen dem Graustufenwert an diesem Punkt des durch die zweite Transformation erhaltenen Wertes und dem Graustufenwert an diesem Punkt des erfassten Bildes ist, derart, dass die falschen Messpunkte beseitigt werden.

2. Verarbeitungsverfahren nach Anspruch 1, wobei der morphologische Operator, der für die erste Transformation verwendet wird, ein Rechteck ist, dessen Länge in Umfangsrichtung des Luftreifens im Bereich von 50 bis 100 Pixel liegt und dessen Breite in der Richtung senkrecht zu der Umfangsrichtung kleiner als 10 Pixel ist.

3. Verarbeitungsverfahren nach Anspruch 1 oder 2, wobei der morphologische Operator, der für die zweite Transformation verwendet wird, ein Rechteck ist, dessen Länge in Umfangsrichtung des Luftreifens im Bereich von 500 bis 1000 Pixel liegt und dessen Breite in der Richtung senkrecht zu der Umfangsrichtung kleiner als 10 Pixel ist.

4. Verarbeitungsverfahren nach einem der Ansprüche 1 bis 3, wobei das aufgenommene Bild jenes der inneren Oberfläche des Luftreifens ist.

## Claims

1. Method for processing the three-dimensional digital image of the surface of a tyre in which:
- the three-dimensional image of the said surface is captured and a value of grey level corresponding to its elevation is assigned to each point of the acquired image,
- with the aid of a first morphological operator using a rectangular key element, a first transformation of the image of the surface of the closure type is carried out,
- with the aid of a second morphological operator using a rectangular key element, a second transformation of the surface of the opening type is carried out on the transformed image,
- at each point of the image, a value of grey level equal to the minimum value between the value of grey level at this point of the image obtained by the second transformation and the value of grey level at this point of the acquired image is assigned so as to eliminate the false measurement points.

2. Processing method according to Claim 1, in which the morphological operator used for the first transformation is a rectangle of which the length in the circumferential direction of the tyre is between 50 and 100 pixels, and the width in the direction perpendicular to the circumferential direction is less than 10 pixels.

3. Processing method according to Claim 1 or 2, in which the morphological operator used for the second transformation is a rectangle of which the length in the circumferential direction of the tyre is between 500 and 1000 pixels, and the width in the direction perpendicular to the circumferential direction is less than 10 pixels.

4. Processing method according to one of Claims 1 to 3, in which the captured image is that of the internal surface of the tyre.
